Europäisches Patentamt

European Patent Office

Office européen des brevets

(11) Publication number: **0 103 828**
**B1**

# EUROPEAN PATENT SPECIFICATION

(45) Date of publication of patent specification: **14.12.88**

(21) Application number: **83108946.1**

(22) Date of filing: **10.09.83**

(51) Int. Cl.⁴: **B 32 B 17/10,** B 32 B 31/00,
B 29 C 51/28, B 32 B 27/08,
B 29 D 9/00

(54) Fabricating shaped laminated transparencies.

(30) Priority: **20.09.82 US 419876**

(43) Date of publication of application:
**28.03.84 Bulletin 84/13**

(45) Publication of the grant of the patent:
**14.12.88 Bulletin 88/50**

(84) Designated Contracting States:
**DE FR GB IT**

(56) References cited:
FR-A-2 190 617
FR-A-2 470 003
US-A-4 180 426
US-A-4 231 827

(73) Proprietor: **PPG INDUSTRIES, INC.
One PPG Place
Pittsburgh Pennsylvania 15272 (US)**

(72) Inventor: **Radzwill, John Edward
1561 Leishman Avenue
Arnold Pennsylvania 15068 (US)**
Inventor: **Bartoli, Roger Fredrick
160 Portland Drive
Natrona Heights Pennsylvania 15065 (US)**

(74) Representative: **Sternagel, Hans-Günther, Dr.
et al
Patentanwälte Dr. Michael Hann Dr. H.-G.
Sternagel Sander Aue 30
D-5060 Bergisch Gladbach 2 (DE)**

Courier Press, Leamington Spa, England.

## Description

### Background of the invention
### 1. Field of the invention

The present invention relates to fabrication of lightweight transparencies, (e.g. aircraft transparencies that have to be both shaped and laminated. Specifically, the present invention relates to a method and apparatus for fabricating lightweight (aircraft) transparencies that require a minimum of expensive equipment and that consumes a minimum of parts during the fabrication of such transparencies.

### 2. Description of the technology and patents of interest

This invention relates to the fabrication of shaped, laminated lightweight plastic transparencies, particularly those comprising at least one sheet of acrylic plastic resin. The acrylic resin may be laminated to additional sheets of acrylic plastic or polycarbonate plastic to form a laminated transparency especially suitable for aircraft.

The transparencies for aircraft are required to fit within a frame and have to be shaped to fit within the frame. In addition, it is desirable for good optics that the surfaces of the acrylic resin sheet that forms an exterior or interior surface of an aircraft transparency be as free from surface marks as possible.

Acrylic resin is used in laminated transparencies for aircraft where glass is unsafe, too heavy, or otherwise impractical. Cast polymethyl methacrylate, which is currently marketed under such trademarks as PLEXIGLAS by Rohm and Haas and LUCITE by DuPont, is a typical acrylic resin that has several characteristics which make it ideally suited for aircraft transparencies, such as canopies and windows for lightweight aircraft. For example, it is considerably lighter than glass, yet is quite strong at ambient temperatures. Moreover, while acrylic resin is relatively soft compared to glass and therefore scratches more readily than glass, the scratches are easily removed merely by polishing the marred area with common polishing compounds. Furthermore, acrylic resin is fairly stable from a chemical standpoint. It is relatively unaffected by most solvents. Furthermore, acrylic resins accept ultraviolet light stabilizers without significantly impairing their light transmitting characteristics

For the above reasons, acrylic resin and particularly cast polymethyl methacrylate has been used as an outer layer of either monolithic or laminated curved aircraft transparencies, particularly for lightweight planes which fly at relatively low altituides and at relatively low speeds. Under such circumstances, the acrylic windows, windshields or canopies of aircraft do not develop a temperature above the softening point of the acrylic resin, which is in the vicinity of 225°F. (107°C.).

Bent laminated transparencies for aircraft have been produced using relatively expensive equipment such as high pressure autoclaves and/or presses. Furthermore, the relatively rigid components of lightweight laminated transparencies for aircraft such as sheets of acrylic plastic and/or polycarbonate sheets have been preformed in a forming operation followed by assembling and laminating the preformed parts to form laminated shaped transparencies. It would be desirable to eliminate such high cost equipment and it would also be considered an improvement in efficiency of operation if it were possible to simultaneously laminate an assembly while it is being shaped.

In laminating glass plastic assemblies, it has been customary according to one method to enclose the assembly to be laminated so that a peripheral ring formed of a split tube of flexible material clamps against the marginal portion of the top and bottom surfaces of the assembly to form a peripheral evacuating chamber. The evacuating chamber is connected to a source of vacuum so as to remove air and other fluids entrapped at the interfaces between the components of the assembly to be laminated. The assemblies are heated to help bond the components at least preliminarily prior to a final laminating step in an expensive autoclave. While such prepressing is suitable for laminating glass to plastic interlayer materials, when a lower softening point material such as acrylic plastic or polycarbonate plastic is used instead of the glass sheets in the assembly to be laminated, the compressive force of the lips of the evacuating ring causes the relatively rigid outer plies of polycarbonate or plastic to become distorted and develop a frame of optical distortion. Such a frame is undesirable.

Other laminating techniques involve the use of flexible bags within which the elements are assembled and laminated. The flexible laminating bags must be destroyed after one laminating cycle in order to remove the laminated assembly after the assembly has been subjected to elevated pressure and temperature while within the evacuated and sealed laminating bag, so that it is impractical to use the laminating bags more than once. Furthermore, such laminating bags are expensive and it would be desirable to develop a method that avoids such laminating bags. In addition, it is impossible to evacuate such laminating bags completely so that some residual air remains entrapped therewithin after a laminating operation is ended. Removal of this residual entrapped air remained a problem at the time of this invention.

Various patents disclose the state of the art and will now be described.

U.S. Patent No. 2,142,445 to Helwig shapes a sheet of thermoplastic material against a concave mold cavity by applying hot liquid under pressure against a surface of a clamped sheet to stretch the sheet against the concave mold cavity and chilling the sheet as it approaches the cavity. The shaping is confined to a monolithic sheet and no laminating is involved.

U.S. Patent No. 2,948,645 to Keim discloses the use of a peripheral evacuation chamber to remove fluid from between the interfacial surfaces of an assembly containing a pair of glass sheets on opposite sides of a flexible sheet of interlayer material during the preliminary stage of a laminating operation. The lips of the peripheral evacuation chamber are stressed to impart a clamping pressure about the perimeter of the assembly to be laminated. This clamping pressure causes the interlayer to extrude from the margin of the assembly to form a frame of optional distortion that is undesirable in aircraft transparencies. Therefore, the peripheral chamber is removed before the final lamination in an autoclave.

Other patents showing similar peripheral evacuation means during a glass sheet lamination operation include U.S Patent No. 2,992,953 to Talburtt, U.S. Patent No. 3,074,466 to Little, U.S. Patent No. 3,281,296 to Jameson and U.S. Patent No. 3,508,996 to Hill. A peripheral evacuation technique using a tight gas seal tightly secured to the edge of the assembly during the Laminating of polymethyl methacrylate is shown in U.S. Patent No. 3,284,263 to Jamet. U.S. Patent No. 3,912,542 to Hirano et al. uses peripheral evacuation and heat to laminate glass sheets to a synthetic resin in an assembly covered by a flexible diaphragm clamped to a support for said assembly. There is no sheet of interlayer in the assembly to be laminated or shaping of the assembly during its lamination in Hirano et al.

U.S Patent No. 3,769,133 to Halberschmidt et al. inserts an assembly to be laminated within a flexible bag, the bag is inserted within a chamber in communication with the chamber, the chamber and bag are evacuated to degas the assembly, the bag is sealed while the chamber is at low pressure and then the sealed bag and its contents are exposed to an elevated pressure and temperature to laminate the assembly within the bag. No shaping takes place during the laminating operation and superatmospheric pressure is used to complete the lamination. This requires expensive equipment for elevated pressure application.

U.S. Patent No. 3,852,136 to Plumat et al. applies a peripheral evacuation tube around the periphery of a plurality of assemblies that are laminated in unison within a chamber or a series of chambers in which the pressure cycle differs from the evacuation pressure applied to the interfacial surfaces of the assemblies through the perpiheries of the latter. No shaping is involved with the laminating technique of this patent and superatmospheric pressure is applied.

U.S. Patent No. 4,180,426 to Oustin et al. evacuates an assembly to be laminated while the assembly is enclosed in a sack and the sack enclosed within a chamber where pressure and temperature are subjected to a cycle suitable for laminating. No shaping is involved in the laminating process. U.S. Patent No. 4,231,827 to Wilson et al. sag bends individual or fused sheets to be laminated to approximate shape and then assembles the sag bent sheets over a flexible blanket of polyurethane foam or felt resting over a vacuum type mold and a flexible diaphragm is applied over the sag bent sheet and the vacuum mold to form the roof of an evacuating chamber around the assembly. The polyurethane foam blanket separates the sheets to be shaped from direct contact with any imperfections in the shaping surface of the vacuum mold. After vacuum forming the layers of the assembly to preliminary shape, the shaped acrylic layers are assembled with interlayers between shaped polycarbonate pressing plates to form a laminating assembly, and the latter is taped and inserted in a flexible laminating bag. The latter is evacuated and sealed and the assembly within the bag between the pressing plates is laminated in an autoclave. The shaping and laminating steps are consecutive not simultaneous and the process requires an expensive autoclave.

U.S. Patent No. 4,287,015 to Danner forms a vacuum bag by applying a flexible sheet of stretchable material over and beyond raised ribbing surrounding an assembly to be laminated to encase the assembly in a vacuum bag. Reusable fastening means is provided to attach the flexible sheet to a support base beyond the ribbing. The bag is evacuated and the assembly within the bag is laminated but not changed in shape.

The art of fabricating lightweight aircraft transparencies at the time of the present invention was in need of low cost apparatus and a relatively low cost operation involving the use of reusable materials that would simultaneously laminate and shape the components of an assembly to be fabricated into a lightweight laminated transparency (e.g. for aircraft).

Summary of the invention

The invention relates to an apparatus and a method of simultaneously shaping and laminating an assembly of plies (or transparencies) as defined in the two independent claims 1 and 5, respectively.

According to the present invention, the elements of an assembly to be laminated to form a lightweight laminated transparency suitable for use in aircraft are first assembled with other flexible elements as part of a cell. The cell comprises a base of flexible foam material softer than acrylic or polycarbonate such as polyurethane foam, on top of which is bonded a layer of a composition having the property of serving as an air impervious parting material against acrylic or polycarbonate plastic, such as a thin sheet of silicone or a flexible sheet of rubber, having smooth surfaces. A flexible ring of air impervious material at least as high as the total thickness of the elements to be laminated is bonded to the perimeter of the upper surface of the sheet of parting material to form a cell wall that surrounds the assembly of elements in spaced relation thereto.

The elements to be laminated are assembled in a desired stacked array and temporarily taped together by a small piece of tape at each side to form a taped assembly. The latter is mounted above the parting material which with the base of foam extends beyond the outline of the assembly to be laminated. The space between the wall of the cell and taped assembly is filled with a packing of porous material that does not adhere to the elements of the assembly to be laminated under conditions of exposure during the method to be described of simultaneously laminating and shaping the elements of the assembly.

At least one aperture extends through the wall of the cell. A pipe extends from said aperture and outward from the cell to communicate the interfaces of the assembly through the packing of porous material with a source of vacuum. Only a small portion of the assembly is taped to minimize interference with the path of evacuation. A flexible diaphragm of air impervious material that does not harm or react chemically with acrylic or polycarbonate plastic is applied to the upper surface of said assembly and over said packing and is bonded to the upper surface of the air impervious wall. When the non-porous cell so formed is evacuated through the pipe in the air impervious wall, the cell of the elements just described becomes a unitary structure which is held together by atmospheric pressure.

The cell so formed is then laid over the upper facing surface of a vacuum mold having at least one vacuum port so that the cell is in facing relation to the vacuum port. A second flexible diaphragm of air impervious material is superimposed over the first flexible diaphragm of the cell and extends therebeyond to a peripheral portion that is bonded to the upper surface of the vacuum mold. The cell is heated to an elevated temperature. A collapsible chamber formed by the second flexible diaphragm and the mold that surrounds the cell is also evacuated through the vacuum port during the latter stages of the cell heating step. A weaker vacuum is applied to the chamber formed by the second diaphragm and the mold than the vacuum to which the cell is subjected through the air impervious wall.

The cell and the vacuum mold and the second flexible diaphragm are subjected to heat at a temperature at which the acrylic or polycarbonate plastic sags but below which the elements of the assembly deteriorate so that the elements of the assembly to be laminated and shaped simultaneously become exposed to a temperature at which the relatively rigid transparent sheets to be laminated sag by gravity at a pressure that does not exceed atmospheric pressure. The vacuum applied to the chamber between the vacuum mold and the second flexible diaphragm enables atmospheric pressure to assist the sagging of the evacuated cell toward the shaping surface of the vacuum mold during the latter stages of shaping.

After the cell has conformed to the shape of the vacuum mold, the temperature is reduced until the shape of the assembly which is now laminated is set, the mold vacuum is discharged, the second flexible diaphragm is removed, the cell is separated from the mold, other vacuum source is disconnected from the cell, and the bent, laminated transparency formed from the original assembly is separated from the rest of the cell and untaped to provide the bent, laminated transparency desired. Further fabrication steps, if needed, such as cutting and routing, and drilling holes to receive attachment bolts therethrough for engagement by bolt receiving holes in the aircraft fuselage to which the lightweight laminated aircraft transparency is to be installed, may be used on the bent, laminated transparency.

The method performed according to the present invention utilizes a minimum of high cost apparatus such as presses or autoclaves because the simultaneous lamination and shaping takes place at a pressure that does not exceed atmospheric pressure. Most of the additional cell components, the evacuating means and the vacuum mold needed for this invention are reuseable. Only relatively inexpensive materials, such as the flexible diaphragms, require replacement for each part to be produced. These and other benefits of the present invention will be understood more fully in the light of a description of a specific embodiment of this invention which follows.

Brief description of the drawing

In the drawings that form part of the description of the specific embodiment of the present invention,

Fig. 1 is an enlarged fragmentary view of a cell incorporating an assembly of flat layers to be simultaneously shaped and laminated;

Fig. 2 is a cross-sectional view to a smaller scale than Fig. 1 showing the apparatus of the invention, i.e. how the cell of Fig. 1 is mounted for shaping on a vacuum type mold for simultaneous shaping and lamination of the assembly; and

Fig. 3 is a sectional view partly in perspective of a laminated transparency that is separated from a shaped cell after the cell is shaped to a simple or compound bend and removed from the vacuum mold.

Description of the preferred Embodiment

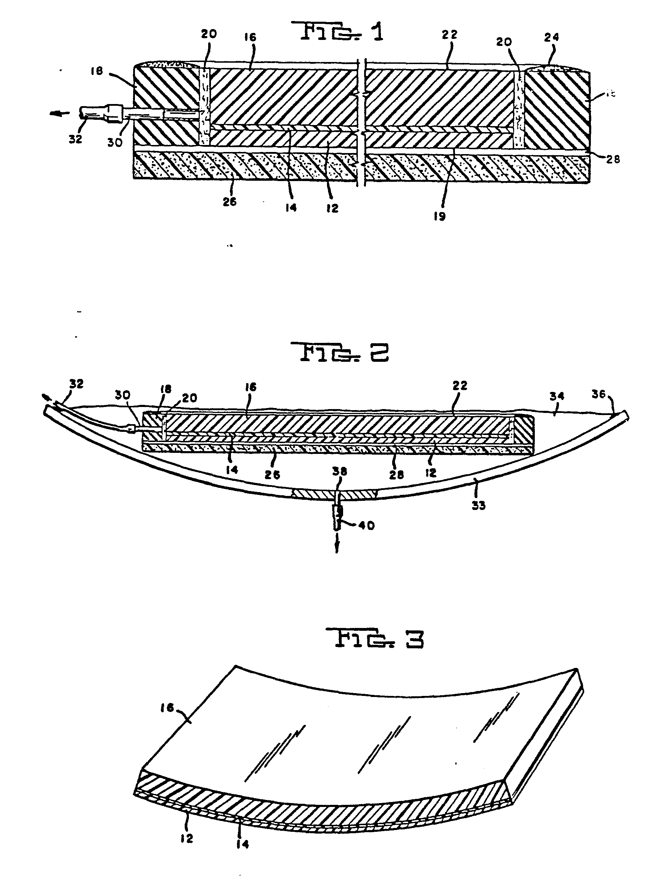

Referring to the drawings, Fig. 1 shows how an assembly to be laminated is assembled within a cell preparatory to simultaneous shaping and laminating. The elements of the assembly to be laminated include an outer ply of relatively rigid transparent materal 12, a ply 14 of interlayer material and an inner ply of relatively rigid transparent material 16. The outer ply 12 is usually composed of an acrylic plastic such as polymethyl methacrylate. In a particular arrangement, the outer acrylic ply 12 is approximately 90 mils (2.29 mm) thick having wire (not shown) embedded within the thickness. The outer ply may be made by fuse bonding two plies together after sewing wire into at least one surface layer of one of said plies and using the wired surface as an interfacial surface of the fused ply. A typical fused outer ply may be fabricated in the manner depicted in U.S. Patent No. 4,128,448 to Bitterice and Keslar, the details of which are incorporated herein by reference. the interlayer sheet 14 is a sheet of polyvinylbutyral plasticized with 21 parts of dibutyl sebacate for 100 parts of resin 50 mils (1.27 mm) thick. An inner ply 16 of stretched acrylic 312 mils (7.93 mm) thick completes the assembly. If desired, the inner ply may be only 1/4 inch (6.35 mm) thick and may comprise a sheet of polycarbonate plastic coated with a suitable protective coating of a hard polyurethane on its exposed surface.

It is understood that the specific dimensions and materials specified are for illustration only. Variations are not excluded from the present invention.

The more rigid plies 12 and 16 are primed on one major surface with a suitable primer, such as a hydrolyzed tetraethyl ortho silicate composition. Then, the plies are stacked in superposed relation with the outer ply 12 having its primed major surface facing upwardly toward the lower major surface of interlayer ply 14 and the inner acrylic or polycarbonate ply 16 having its primed major surface facing downwardly toward the upper major surface of interlayer ply 14. A thin strip of adhesive tape (not shown) is applied to each side of the assembly that results to hold the assembly elements together in such a manner that almost the entire edge of the assembly remains exposed.

Other primers are more suitable for assemblies of acrylic plastic with polyurethane interlayers. For example, U.S. Patent No. 4,177,099 to John Radzwill, the disclosure of which is incorporated herein by reference, describes the use of a primer comprising small particles of polyurethane in chloroform as a primer for bonding arcylic plastic to a polyurethane interlayer.

A cell comprising a flexible, air impervious peripheral rubber wall 18 surrounds the assembly in spaced relation thereto. Porous fiber glass cloth filler 20 is used within the space between the assembly of plies 12, 14 and 16 to be laminated and the peripheral rubber wall 18. A first thin, flexible, air impervious diaphragm 22 of polyvinyl fluoride, commercially available under the trademark TEDLAR in thickness of 1 to 3 mils (.025 to .076 mm) is adhered to the upper surface of the rubber wall 18 and stretches over the upper surface of the inner ply 16 of the assembly to be laminated to form the roof of the cell. An adhesive of plastic sealer tape 24 such as available as PRESSTITE No. 579.6, sold by ATACS, Inc., Long Beach, CA, is used to adhere the first polyvinyl fluoride diaphragm 22 to the upper surface of the solid rubber wall 18.

The peripheral wall 18 has a height equal to the combined thickness of the plies forming the assembly 12, 14, 16 to be laminated. Hence, when the first diaphragm 22 is applied to the sealer tape 24 atop the rubber wall 18, it is stretched in contact against the upper surface of inner ply 16.

The base of the flexible cell of the present invention comprises a polyurethane foam blanket 26 approximately 1/2 inch (12.7 mm) thick covered with a thin film 28 about 1 to 3 mils (.025 to .08 mm) thick of smoothly surfaced, air impervious, flexible parting material, such as a high molecular weight siloxane sold as SYLGARD 184 a vinyl terminated dimethyl siloxane of high molecular weight formed with a catalyst having a low molecular weight dimethyl siloxane hydride and a chloroplatinic acid curing agent, supplied by Dow Corning. The parting material film 28 is bonded against the polyurethane foam blanket 26. The rubber wall 18 is bonded to the upper surface of the siloxane parting film 28 by a suitable adhesive such as General Electric 108, an acetoxy blocked dimethyl siloxane of high molecular weight. If desired, a rubber sheet approximately 40 mils (1 mm) thick can be used as a parting material instead of the dimethyl siloxane, particularly when stretched acrylic is the outer sheet applied thereagainst.

The siloxane parting material film 28 is bonded to the upper surface of the blanket 26 of polyurethane foam to form the base of the cell enclosure that surrounds the assembly to be shaped and laminated. The unitary structure of blanket and parting material is previously formed by casting the vinyl terminated dimethyl siloxane which forms the parting material film 28 onto a sheet of glass and applying the polyurethane foam blanket 26 over the resulting film of the siloxane. The siloxane cures at room temperature, but curing can be accelerated and bonding completed if the glass sheet containing the film of silicone and the polyurethane foam blanket is inserted in an oven at 130°F. (54°C.) for 2 hours. The unitary structure of blanket 26 and parting material film 28 is separated from the glass sheet. The rubber wall 18 is then adhered to the perimeter of the exposed surface of the parting material film 28 using as adhesive GE#108, described earlier, so that the taped assembly of plies 12, 14 and 16 may be stacked atop the parting material film 28 of the flexible cell base in spaced relation within the peripheral wall 18.

A hole through the wall 18 receives a metal tube 30 to which is attached a rubber hose 32. The latter is adapted to be coupled to a vacuum source (not shown) and holds the components of the flexible cell containing the assembly to be laminated by atmospheric pressure when the vacuum source is applied. The cell ready for treatment in a vacuum mold is shown assembled in Fig. 1.

The cell of Fig. 1 is mounted as a unitary flexible structure held together by vacuum on a vacuum mold 33 having an upper shaping surface on concave configuration conforming to the shape desired for the outer ply 12 of the assembly to be laminated to form an aircraft transparency. The vacuum mold 33 is composed of fiber glass reinforced epoxy resin. The polyurethane foam blanket 26 of the cell is mounted in facing relation to the shaping surface of the vacuum mold 33. A second thin diaphragm 34 larger than the outline of the cell, but of approximately the same thickness of polyvinyl fluoride as diaphragm 22, is applied over the cell and around the rubber hose 32 that forms the vacuum passage from the interior of the cell. Additional adhesive 36 similar to adhesive 24 is provided on the upper surface of the vacuum mold 33 to bond the second flexible diaphragm 34 to the vacuum mold 33 and encloses the cell of Fig. 1 within a vacuum chamber formed by the vacuum mold 33 and the second flexible diaphragm 34 with the adhesive 36 holding the second diaphragm 34 in air tight relation against the vacuum mold 33.

The vacuum mold 33 is provided with a vacuum port 38 that faces the cell. An exhaust tube 40 communicates port 38 to a second source of vacuum. This latter vacuum is applied to the chamber that surrounds the cell.

It will be noted from a study of Figs. 1 and 2 that the outline of the rubber wall 18 is approximately equal to the respective outlines of the siloxane parting film 28 and the polyurethane foam blanket 26. Thus, when vacuum is applied from a vacuum source through the rubber hose 32 and the metal tube 30, any air within the cell including the interfaces between the plies 12, 14 and 16 to be laminated is sucked out of the cell and the plies 12, 14 and 16 to be laminated is sucked out of the cell and the plies 12, 14 and 16 are held together in very intimate contact.

The polyurethane foam blanket 26 protects the assembly of plies 12, 14 and 16 to be laminated, particularly the bottom surface of the outer ply 12, against direct contact with the upper surface of the vacuum mold 33, which may be rough. The smooth surface of the parting material film 28 protects the otherwise exposed surface of the outer acrylic ply 12 from replicating the foam configuration of the supporting surface of the polyurethane foam blanket 26.

The cell enclosing the assembly of plies 12, 14 and 16, which comprises the rubber peripheral wall 18, the fiber glass packing 20, the parting material film 28, the polyurethane foam blanket 26 and the first diaphragm 22, is subjected to vacuum so as to suck the first diaphragm 22 against the upper surface of the assembly, wall and packing and causes the entire cell to be a unitary structure. When the evacuated cell is located in sag bending relation upon the vacuum mold 33 while vacuum is applied to the cell, the second diaphragm 34 extending beyond the dimensions of the cell is adhered to the vacuum mold 33, using the Presstite tape 36 which is applied in a manner similar to adhesive tape 24. The Presstite tape used for adhesives 24 and 36 is a tacky, noncuring adhesive material that is furnished in the form of a tape 1/2 inch (12.7 mm) wide and 1/8 inch (3.22 mm) thick. The vacuum mold 33 is preferably formed of a high temperature epoxy resin. The second diaphragm 34 is stretched over the cell and bonded to the adhesive 36 applied to the upper surface of the vacuum mold 33 in spaced relation to the perimeter of the cell. The assembly of cell and vacuum mold containing the cell is then placed into a hot air circulating oven. The oven is heated to a high temperature of approximately 210°F.±10°F (99°C±6°C) for approximately 4 hours, at least the first two hours of which is performed without applying vacuum to the vacuum mold 33. For at least the last 30 minutes of this exposure to high temperatures, a vacuum pressure of 5 to 10 inches (125 to 254 mm) of mercury (1 mm Hg=1.333×10² Pa) is applied to the chamber exterior of the cell through the vacuum port 38. This latter vacuum causes the latter chamber to collapse about the cell. Throughout the heating step, a higher vacuum on the order of approximately 28 to 29 inches (711 to 737 mm) of mercury (1 mm Hg=1.333×10² Pa) is applied simultaneously through the metal tube 30 and the rubber hose 32 to the cell.

As a result of the heating treatment previously described, the cell sags to conform to the shape of the upward facing surface of the vacuum mold 33. The first diaphragm 22 is tightened against the cell due to the application of vacuum to the cell and the cell obtains the shape of the vacuum mold 33 due to the application of vacuum to the mold chamber surrounding the cell augmented by atmospheric pressure on the cell. The plastic transparency comprising plies 12, 14 and 16 is thus simultaneously formed and laminated.

The cell and its contents are than cooled to room temperature while the cell is still under the cell vacuum to set the shape of the assembly, which has been laminated and simultaneously shaped. The mold vacuum is discontinued. The cooled cell is removed from the vacuum mold. The vacuum source to the cell may be discontinued either before or after removing the cool cell from the vacuum mold. The simultaneously laminated and formed transparency 12, 14 and 16 is then removed from the cell which is ready for reuse. The base of the cell including blanket 26 and parting material film 28 and the flexible wall 18 of the cell resume a flat configuration after the shaped, laminated transparency is removed. The only materials that need to be replaced for another shaping operation are the thin diaphragms and some of the fiber glass packing for the filler 20.

Twenty test transparencies were fabricated, some fabricated with deficient material using the cell forming technique of the present invention. These were inspected for acceptance based on customer requirements. All of the test laminates met the requirements for shape based on tolerances permitted by customers. Optical properties where checked by viewing a lighted grid board of criss-crossing strings through the fabricated laminated transparency at an oblique angle at which the transparency is expected to be installed. The transparencies viewed in this manner were deemed to have passed this test except for the defects that were present in the material at the start of the fabrication test.

Another test performed on one of the laminated transparencies involved heating the latter to 160°F. (71°C.), maintaining the tested transparency at that temperature for 2 hours, cooling it to room temperature of about 70°F. (21°C.), reheating to 160°F. (71°C.), maintaining that temperature for 4 hours, cooling to room temperature, reheating to 160°F. (71°C.), maintaining the high temperature for 6 hours, cooling to room temperature and finally heating to and maintaining a temperature of 160°F. (71°C.) for 100 hours before cooling to room temperature. The tested laminated transparency was inspected for the presence of bubbles and delamination after each cooling and no such defects were observed. Standard production testing involves a maximum of about 6 hours of heating at 160°F. (71°C).

As a further precaution to insure that the lamination was successful, the tested laminated transparency was heated and maintained at an elevated temperature of 180°F. (82°C.) for two hours and inspected for bubbles and delamination after said heat treatment followed by cooling to room temperature. No defect of either type was observed after this treatment.

The results of these tests indicated the cell method succeeded in simultaneously shaping and laminating laminated acrylic transparencies. Different thicknesses of plies are laminated and shaped simultaneously at the same approximate temperature range of 200-220°F. (94—105°C.) for different time periods. Generally, longer time is needed for conforming thicker assemblies than thinner assemblies.

Prior to the successful simultaneous shaping and laminating of laminated acrylic or polycarbonate transparencies by the cell method of the present invention, the 90 degree NASA peel test was used to compare the adhesion of flat sheets of acrylic plastic to interlayer sheets of polyvinyl butyral plasticized with 37.5 parts by weight of dibutyl sebacate to 100 parts of interlayer and others with interlayer sheets plasticized with 21 parts by weight of dibutyl sebacate per 100 parts of interlayer when laminated by the cell method of the present invention (omitting only the simultaneous shaping step) compared to the prior art technique of laminating identical assemblies involving using an autoclave.

The test assemblies compared for adhesive properties contained the same assembly arrangement and the same primer. Those representing the prior art were inserted in a sealed, evacuated laminating bag of the type disclosed in U.S. Patent No, 3,311,517 of Leroy D. Keslar and John S Rankin while those representing the present invention were contained in an evacuated flat cell of the type depicted in Fig. 1. Each tested assembly was 12 inches (30 cm) square containing adjacent plies of acrylic plastic and the aforesaid plasticized polyvinyl butyral with a strip two inches (5 cm) wide of parting material applied along one edge in one direction and narrower strips of parting material one inch (2.5 cm) wide separated by one inch (2.5 cm) were applied in a direction normal to the first direction and a rigid backup sheet having a coating of parting material applied in facing relation to the opposite side of the interlayer. After the prior art specimens were laminated at a temperature of 215°F. (102°C.) for 60 minutes at a pressure of 200 pounds per square inch 200×6.815×10³ Pa and those specimens representing the present invention were heated for 4 hours in an evacuated, air impervious cell, each specimen was cut into 6 strips of a laminate in the areas between the narrower strips. The resulting test strips were each 12 inches (30 cm) long and one inch (2.5 cm) wide with a 2 inch (5 cm) long tab of polyvinyl butyral separated from the acrylic plastic. An Instron test machine held the laminated portions of the strip tested between free running rolls and pulled the tab normal to the interfacial surface between the plies of the strip. A recorder indicated the pull force required to separate the polyvinyl butyral beyond the tab from the remainder of the acrylic plastic to which it was bonded by lamination.

Before the peel test was performed, the laminated strips were subjected to ten days of exposure to cyclic humidity. Each day involved heating the strips to 65°C at a 95% relative humidity atmosphere in 2 hours, maintaining the temperature and humidity conditions for 6 hours and dropping the temperature to 23°C in an atmosphere of 85% relative humidity for 16 hours. The comparison of peel test results for strips comprising polyvinyl butyral plasticized with 37 parts by weight of dibutyl sebacate per 100 parts of interlayer was 60 pounds per linear inch (equivalent to 10.7 Kilograms per linear centimeter) for laminates fabricated by the cell method of the present invention compared to 40 pounds per linear inch (equivalent to 7.1 Kilograms per linear centimeter) for laminates fabricated in a sealed, evacuated envelope in an autoclave. In tests on strips of acrylic laminated to polyvinyl butyral plasticized with 21 parts of dibutyl sebacate per 100 parts of interlayer, the 90 degree NASA peel test showed an average peel value of 68 pounds per linear inch (equivalent to 12.1 Kilograms per linear centimeter) for strips fabricated using the cell technique of the present invention compared to only 37 pounds per linear inch (equivalent to 6.6 Kilograms per linear centimeter) for strips fabricated in a laminating bag in an autoclave.

## Claims

1. Apparatus for simultaneously shaping and laminating an assembly of plies characterized by

(i) a flexible cell comprising an air impervious base of a sheet (26) of deformable foam material and a film (28) of smoothly surfaced, air-impervious parting material bonded to the upper surface of said sheet (26), said base being larger than the outline of the assembly to be shaped and laminated, a flexible air impervious peripheral rubber wall (18) bonded to said film (28), having a height approximately equal to the total thickness of the assembly to be simultaneously shaped and laminated and a first flexible diaphragm (22) of air impervious material bonded to the upper surface of said wall (18) forming the roof of said cell and means (30, 32) extending through said flerxible wall (18) adapted to be coupled to a vacuum source and in communication with the interior of this cell:

(ii) a vacuum mold (33) having an upward facing shaping surface of concave elevation conforming to the desired shape of the assembly and a vacuum opening (38) to support said flexible cell, and second flexible diaphragm (34) of air impervious material extending beyond the dimensions of the flexible cell which is stretched over the cell and bonded to the upper surface of the vacuum mold (33) in spaced relation to the perimeter of the cell and means (40) to couple said vacuum opening to a second vacuum source.

2. The apparatus of claim 1, characterized in that a filler (20) of porous material is provided between the flexible peripheral rubber wall (18) and the outline of the assembly to be laminated and shaped.

3. The apparatus of claim 1, characterized in that the first flexible diaphragm (22) is bonded to the upper surface of the wall (18) by an adhesive plastic sealer tape (24).

4. The apparatus of claim 1, characterized by further including an air circulating oven to receive the vacuum mold (33) with the flexible cell therein and which is equipped with means to apply vacuum to the vacuum mold (33) through the means (30, 32) to the flexible wall.

5. A method of simultaneously shaping and laminating a light-weight laminated transparency including a pair of rigid plies and a flexible interlayer therebetween, forming an assembly to be shaped and laminated by heating said assembly to its deformation temperature after it has been placed in a vacuum mold within an oven, cooling the mold and the assembly and removing the shaped laminated transparency from the mold characterized by using acrylic or polycarbonate plastic as rigid plies and polyurethane or plasticized polyvinylbutyral as flexible interlayer and supporting the assembly on a base of flexible non-porous cell slightly larger in outline than said assembly in such a manner that the perimeter of said assembly is in spaced relation within a flexible air-impervious peripheral wall enclosing the cell, providing the peripheral space between the said wall and said assembly with a porous filler material that does not adhere to the elements under conditions of exposure during this method, bonding a first flexible diaphragm (22) of air impervious material to the upper surface of the peripheral cell wall to form a roof of the cell, communicating said cell to a vacuum source and applying subatmospheric pressure within said cell so that the cell of the elements becomes a unitary structure, mounting the cell over a vacuum mold having an upward facing shaping surface of concave elevation conforming to the shape desired for said transparency, applying a second flexible diaphragm (34) of air-impervious material over this cell and bonding the portion of the second flexible diaphragm extending beyond the dimensions of the cell to the upper surface of the mold, in spaced relation to the periphery of the cell forming a collapsible chamber surrounding the cell, placing the collapsible chamber within an air circulating oven and heating the collapsible chamber containing the cell and the assembly while the cell is under a vacuum of 948 to 982 millibar (711—737 mm Hg) to a temperature of 99°±6°C. for at least two hours to sag said cell toward said upper shaping surface of the vacuum mold, then applying a vacuum of 169 to 339 millibar (127 mm to 254 mm Hg) for at least 30 minutes through a vacuum opening of the mold (i.e. of the collapsible chamber) while the cell is heated and sealed, to conform the cell to the shaping surface of the mold, cooling the cell and its contents after it conforms to said shaping surface to room temperature while maintaining vacuum within the cell until said bent, laminated transparency within the cell retains its shape, and separating said cell from the mold and the formed laminated transparency from the shaped cell.

6. The method of claim 5, characterized in that the assembly is of alternate relatively rigid plies of acrylic plastic and flexible interlayers.

**Patentansprüche**

1. Vorrichtung zum gleichzeitigen Verformen und Laminieren eines Stapels von Schichten gekennzeichnet durch,

(i) eine flexible Zelle mit einem luftundurchläßigen Boden aus einer Folie (26) aus verformbarem Schaumstoff und einem Film (28) mit glatter Oberfläche aus luftundurchläßigem Trennmaterial, der mit der oberen Oberfläche der Folie (26) verbunden ist, wobei der Boden einen größeren Außenumfang als der zu verformende und zu laminierende Schichtstapel aufweist, einem mit dem Film (28) verbundenen flexiblen luftundurchläßigen Außenrand (18) aus Kautschuk, dessen Höhe annähernd gleich der Gesamtdicke des gleichzeitig zu verformenden und zu laminierenden Schichtstapels ist und mit einer ersten flexiblen Membran (22) aus einem luftundurchläßigen Material, die mit der oberen Oberläche des Randes (18) verbunden ist und den Deckel der Zelle bildet und mit dem Innenraum der Zelle in Verbindung stehende Einrichtungen (30, 32), die sich durch den flexiblen Rand erstrecken zum Anschluß an eine Vakuumquelle,

(ii) eine Vakuumform (33) mit einer nach oben gerichteten konkaven Formfläche, die der gewünschten Form des Schichtenverbundes entspricht und einer die flexible Zelle tragenden Vakuumöffnung (38) und einer zweiten flexiblen Membran (34) aus luftundurchläßigem Material, die sich bis außerhalb de flexiblen Zelle erstreckt und die über die Zelle gespannt und mit der oberen Oberfläche der Vakuumform (33) in Abstand vom Umfang der Zelle verbunden ist und mit Einrichtungen zum Anschluß der Vakuumöffnung an eine zweite Vakuumquelle.

2. Vorrichtung nach Anspruch 1, dadurch gekennzeichnet, daß ein poröses Füllmaterial zwischen dem flexiblen Außenrand (18) aus Kautschuk und der Außenlinie des zu verformenden und zu laminierenden Schichtstapels vorhanden ist.

3. Vorrichtung nach Anspruch 1, dadurch gekennzeichnet, daß die erste flexible Membran (22) mittels eines Kunststoffklebebandes (24) an der oberen Oberfläche des Randes (18) befestigt ist.

4. Vorrichtung nach Anspruch 1, dadurch gekennzeichnet, daß sie wieterhin einen Umluftofen zu Aufnahme der Vakuumform (33) mit der darin angeordneten flexiblen Zelle aufweist, der mit Einrichtungen zum Anlegen von Vakuum an die Vakuumform (33) über die Einrichtungen (30, 32) in dem flexiblen Rand ausgestattet ist.

5. Verfahren zum gleichzeitigen Verformen und Laminieren eines leichtgewichtigen laminierten transparenten Verbundmaterial aus einem Paar fester Schichten mit einer dazwischen angeordneten flexiblen Schicht durch Ausbilden eines zu verformenden und zu laminierenden Schichtstapels und Erwärmen des Stapels auf seine Verformungstemperatur, nachdem er in eine Vakuumform in einem Ofen eingebracht wurde, Kühlen der Form und des Stapels und Entfernen des verformten laminierten transparenten Verbundmaterials aus der Form, gekennzeichnet durch, Verwenden von Acrylatpolymer oder Polycarbonat als feste Schichten und Polyurethan oder weichgemachtem Polyvinylbutyral als flexible Zwischenschicht und Abstützen des Schichtstapels auf dem Boden einer flexiblen nicht porösen Zelle deren Umfang etwas größer als der Schichtstapel ist, derart, daß der Umfang des Schichtstapels einen Abstand zum umgebenden flexiblen luftundurchläßigen Außenrand der Zelle aufweist, Ausfüllen des Raumes zwischen dem Rand und dem Schichtstapel mit einem porösen Füllmaterial, das unter den Bedingungen während dieses Verfahrens nicht an den Teilen haftet, Befestigen einer ersten flexiblen Membran (22) aus luftundurchläßigem Material auf der oberen Obefläche des Außenrandes, um einen Zelldeckel auszubilden, Anschließen der Zelle an einer Vakuumquelle und Anlegen eines Unterdruckes in die Zelle, so daß die Teile der Zelle eine bauliche Einheit ausbilden, Montieren der Zelle auf einer Vakuumform, die eine nach oben gerichtete konkave Fläche aufweist deren Form der gewünschten Form des Schichtenverbundes entspricht, Anbringen einer zweiten flexiblen Membran (34) aus luftundurchläßigem Material über dieser Zelle und Verbinden des sich über die Zelle hinaus erstreckenden Teils der zweiten flexiblen Membran mit der oberen Oberfläche der Form in Abstand vom Umfang der zelle und Ausbilden einer zusammenziehbaren, die Zelle umgebenden Kammer, Einbringen der zusammenziehbaren Kammer in einem Umluftofen und mindestens zwei Stunden dauerndes Erwärmen der zusammenziehbaren Kammer mit der darin enthaltenen Zelle und dem Schichtstapel während die Zelle ein Vakuum von 948 bis 982 millibar (711—737 mmHg) aufweist, auf eine Temperatur von 99±6°C, um die Zelle auf die obere Formfläche der Vakuumform absacken zu lassen, Anschließendes mindestens 30 Minuten andauerndes Anlegen eines Vakuums von 169-339 millibar (127—2254 mmHg) durch die Vakuumöffnung der Form (das ist die zusammenziehbare Kammer) während die Zelle erwärmt und verschlossen ist, um die Zelle in Übereinstimmung mit der Formfläche der Form zu bringen, Abkühlen der Zelle und ihres Inhalts, nachdem er mit der Formfläche übereinstimmt, auf Raumtemperatur unter Aufrechterhaltung des Vakuums in der Zelle bis das gebogene laminierte transparente Verbundmaterial in der Zelle seine Form behält und Abtrennen der Zelle von der Form und Entnehmen des verformten laminierten Verbundmaterials aus der geformten Zelle.

6. Verfahren nach Anspruch 5 dadurch gekennzeichnet, daß der Schichtstapel eine abwechselnde Folge von relativ harten Schichten aus Acrylatpolymer und flexiblen Zwischenschichten aufweist.

**Revendications**

1. Dispositif pour le formage et la stratification simultanée d'un ensemble de couches, caractérisé par:

(i) une capsule souple comprenant une base imperméable à l'air, formée d'une plaque (26) de mousse déformable et d'un film (28) de matière de séparation imperméable à l'air à surface lisse, uni à la surface supérieure de ladite plaque (26), cette base étant plus grande que le contour de l'ensemble qui doit être mis en forme et stratifié, et paroi de caoutchouc (18) périphérique flexible et imperméable à l'air, unie audit film (28), ayant une hauteur approximativement égale à l'épaisseur totale de l'ensemble qui doit être simultanément mis en forme et stratifié, une première membrane flexible (22) en une matière imperméable à l'air, unie à la surface supérieure de ladite paroi (18), formant le toit de la capsule, et des moyens (30, 32) traversant ladite paroi flexible (18), destines à être raccordés à une source de vide et communiquant avec le volume intérieur de la capsule;

(ii) un moule à vide (33) comportant une surface de formage dirigee vers le haut, ayant en élévation une forme concave qui épouse la formé voulue de l'ensemble et munie d'un orifice de vide (38), pour supporter ladite capsule flexible, une seconde membrane flexible (34) en une matière imperméable à l'air, s'étendant au-delà des dimensions de la capsule flexible, cette membrane étant tendue au-dessus de la capsule et unie à la surface superieure du moule à vide (33) à distance du périmetre de la capsule, et des moyens (40) pour raccorder ledit orifice de vide à une seconde source de vide.

2. Dispositif selon la revendication 1, caractérisé en ce qu'une matière poreuse de remplissage (20) est placée entre la paroi péripherique flexible en caoutchouc (18) et le contour de l'ensemble qui doit être stratifie et mis en forme.

3. Dispositif selon la revendiation 1, caractérisé en ce que le première membrane flexible (22) est unie à la surface supérieure de la paroi (18) par un ruban adhésif d'étanchéité en matière plastique (24).

4. Dispositif selon la revendication 1, caractérisé en ce qu'il comprend en outre une étuve à circulation d'air qui est destinée à recevoir le moule à vide (33) avec la capsule dans celui-ci et qui est équipée de moyens pour appliquer un vide dans le moule à vide (33) par l'intermédiaire des moyens (30, 32) prévus sur la paroi flexible.

5. Procédé de formage et de stratification simultanés d'un stratifié transparent léger comprenant une pair de couches rigides et une couche intermédiaire flexible entre celles-ci, par formation d'un ensemble propre à être mis en forme et stratifié par chauffage de cet ensemble à sa température de déformation après qu'il a été place dans un moule à vide a l'intérieur d'une étuve, par refroidissement du moule et de l'ensemble et par démoulage du stratifié transparent mis en forme, caractérisé en ce qu'on utilise, pour les couches rigides, une matière plastique acrylique ou de polycarbonate et, pour la couche intermédiaire flexible, un polyuréthane ou un polyvinylbutyral plastifié, et en ce qu'on pose l'ensemble sur une base d'une capsule flexible non poreuse dont le contour est un peu plus grand que celui dudit ensemble, de telle manière que le périmètre de l'ensemble soit à distance à l'intérieur d'une paroi periphérique flexible et imperméable à l'air qui entoure la capsule, on garnit l'intervalle périphérique entre ladite paroi et ledit ensemble d'une matière poreuse de remplissage qui n'adhère pas à ces éléments dans les conditions auxquelles elle est soumise pendant l'application du procédé, on fixe et première membrane flexible (22) en une matière imperméable à l'air à la surface supérieure de la paroi périphérique de la capsule pour former un toit de la capsule, on met la capsule en communication avec une source de vide et on crèe une pression inférieure à la pression atmosphérique dans la capsule de telle sorte que les éléments de celleci soient unis en un ensemble solidaire, on monte la capsule sur un moule à vide présentant une surface de formage, dirigée vers le haut, qui présente en élévation et forme concave épousant la forme voulue pour le stratifié transparent, on applique une seconde membrane flexible (34) en matière imperméable à l'air sur la capsule et on fixe la partie de la seconde membrane flexible qui s'étend au-delà des dimensions de la capsule à la surface supérieure du moule, à distance de la periphérie de la capsule, pour former une chambre rétractable qui entoure la capsule, on place la chambre retractable dans une étuve à circulation d'air et on chauffe la chambre rétractable contenant la capsule et l'ensemble, tandis que la capsule est sous un vide de 948 à 982 millibars (711—737 mm Hg), à une température de 99°±6°C pendant 2 h au moins, de telle sorte que la capsule s'affaisse en direction de ladite surface supérieure de formagè du moule à vide, puis on crée un vide de 169 à·339 millibars (127 à 254 mm Hg) pendant au moins 30 mm au moyen d'un orifice de vide du moule (c'est-à-dire de la chambre rétractable), tandis que la capsule est chauffée et scellée, pour que la capsule épouse la forme de la surface de formage du moule, on refroidit à la temperature ambiante la capsule et son contenu après qu'il a épouse la forme de ladite surface de formage, tout en entretenant le vide dans la capsule, jusqu'à ce que le stratifié cintré dans la capsule conserve sa forme, et on sèpare la capsule d'avec le moule et le stratifié transparent mis en forme d'avec la capsule mise en formé.

6. Procédé selon la revendiction 5, caractérisé en ce que ledit ensemble est formé par une disposition alternée de couches relativement rigides de matière plastique acrylique et de couches intermédiaires flexibles.

FIG. 1

FIG. 2

FIG. 3